# EUROPEAN PATENT APPLICATION

(11) **EP 4 665 000 A1**
(43) Date of publication of application: **17.12.2025**
(21) Application number: 23921167.5
(22) Date of filing: 09.02.2023
(51) Int. Cl.: H04W 48/10, H04W 16/26, H04W 48/16, H04W 48/20, H04W 60/00, H04W 84/00, H04W 88/08

(54) **WIRELESS BASE STATION, WIRELESS RELAY DEVICE, MOBILE BODY, WIRELESS COMMUNICATION SYSTEM, WIRELESS COMMUNICATION METHOD, AND PROGRAM**

(71) Applicant: HONDA MOTOR CO., LTD., Tokyo 105-8404 (JP)
(72) Inventor: OTAKA Masaru, Tokyo 107-8556 (JP); OI Yusuke, Tokyo 107-8556 (JP)
(74) Representative: Weickmann & Weickmann PartmbB
(86) International application number: PCT/JP2023/004466
(87) International publication number: WO 2024/166336

(57) **Abstract**

A wireless base station includes: a control unit which generates (i) first information for a wireless relay device to perform processing to camp on the wireless base station, the wireless relay device being movable and having a function of relaying a communication between a terminal device and the wireless base station, or between another wireless relay device and the wireless base station, and (ii) second information for the terminal device to perform processing to camp on the wireless base station; and a communication unit which transmits the first information and the second information by broadcast information.

## Description

### BACKGROUND

### 1. TECHNICAL FIELD

The present invention relates to a wireless base station, a wireless relay device, a mobile body, a wireless communication system, a wireless communication method, and a program.

### 2. RELATED ART

Patent Documents 1 to 3 discloses technologies relating to a mobile communication.

### Related Art Documents

### Patent Document

Patent Document 1: Japanese Patent No. 5077460
Patent Document 2: Japanese Patent Application Publication No. 2019-106738
Patent Document 3: Japanese Patent Application Publication No. 2010-087912

### Technical Problem

When a mobile body has a function as a wireless base station, there is a problem that it is necessary to perform optimal camping control in consideration of a movement of the mobile body. By resolving the problem described above, the present application makes it possible to enhance stability of a communication for the mobile body. Furthermore, it is possible to more improve traffic safety and contribute to a development of a sustainable transportation system.

### General Disclosure

In a first aspect of the present invention, a wireless base station is provided. The wireless base station includes: a control unit which generates (i) first information for a wireless relay device to perform processing to camp on the wireless base station, the wireless relay device being movable and having a function of relaying a communication between a terminal device and the wireless base station, or between another wireless relay device and the wireless base station, and (ii) second information for the terminal device to perform processing to camp on the wireless base station. The wireless base station includes a communication unit which transmits the first information and the second information by broadcast information.

In the wireless base station, the control unit may generate first broadcast information including the first information, and second broadcast information including the first information for the terminal device. The communication unit may transmit the second broadcast information separately from the first broadcast information.

In the wireless base station, the control unit may generate at least one piece of broadcast information including at least a part of the first information or the second information. The communication unit may transmit the at least one piece of broadcast information generated by the control unit.

In any of the wireless base stations described above, the broadcast information may be a system information block (SIB).

In any of the wireless base stations described above, the first information may include a plurality of public land mobile network (PLMN) identifiers that are able to be used by the wireless base station.

In any of the wireless base stations described above, the first information may include at least one of information for the wireless relay device to perform a cell selection, or barring information for barring access to the wireless base station.

Any of the wireless base stations described above may further include: a storage unit which stores area identification information for identifying a cell area in which the wireless relay device is able to relay the communication between the terminal device and the wireless base station. The first information may include the area identification information.

In a second aspect of the present invention, a wireless communication system is provided. The wireless communication system includes any of the wireless base stations described above; and the wireless relay device.

In a third aspect of the present invention, a program is provided. The program causes a computer to function as any of the wireless base stations described above.

In a fourth aspect of the present invention, a wireless relay device is provided. The wireless relay device is movable. The wireless relay device includes a communication unit which receives one or more pieces of broadcast information that are transmitted from a wireless base station. The wireless relay device includes a control unit which performs processing to camp on the wireless base station based on the one or more pieces of broadcast information. The wireless relay device has a function of relaying a communication between a terminal device and the base station, or between another wireless relay device and the wireless base station. The one or more pieces of broadcast information include (i) first information for the wireless relay device to perform processing to camp on the wireless base station, and (ii) second information for the terminal device to perform processing to camp on the wireless base station. The control unit discards the second information and extracts the first information from among the one or more pieces of broadcast information, and performs the processing to camp on the wireless base station based on the first information.

In the wireless relay device, the first information may include a plurality of public land mobile network (PLMN) identifiers that are able to be used by the wireless base station. The control unit may perform the processing to camp on the wireless base station, based on a PLMN identifier preset in the wireless relay device and the plurality of public land mobile network (PLMN) identifiers that are included in the first information.

In a fifth aspect of the present invention, a mobile body is provided. The mobile body includes any of the wireless relay devices described above.

In a sixth aspect of the present invention, a wireless communication system is provided. The wireless communication system includes any of the wireless relay devices described above; and the wireless base station.

In a seventh aspect of the present invention, a program is provided. The program causes a computer to function as any of the wireless relay devices described above.

In an eighth aspect of the present invention, a wireless communication method is provided. The wireless communication method includes: generating (i) first information for a wireless relay device to perform processing to camp on a wireless base station, the wireless relay device being movable and having a function of relaying a communication between a terminal device and the wireless base station, or between another wireless relay device and the wireless base station, and (ii) second information for the terminal device to perform processing to camp on the wireless base station. The wireless communication method includes: transmitting the first information and the second information by broadcast information.

In a ninth aspect of the present invention, a wireless communication method is provided. The wireless communication method is executed by a wireless relay device which is movable. The wireless communication method includes receiving one or more pieces of broadcast information that are transmitted from a wireless base station. The wireless communication method includes performing processing to camp on the wireless base station based on the one or more pieces of broadcast information. The wireless relay device has a function of relaying a communication between a terminal device and the base station, or between another wireless relay device and the wireless base station. The one or more pieces of broadcast information include (i) first information for the wireless relay device to perform processing to camp on the wireless base station, and (ii) second information for the terminal device to perform processing to camp on the wireless base station. The performing the processing to camp on the wireless base station is discarding the second information and extracting the first information from among the one or more pieces of broadcast information, and performing the processing to camp on the wireless base station based on the first information.

The summary clause does not necessarily describe all necessary features of the embodiments of the present invention. The present invention may also be a sub-combination of the features described above.

### BRIEF DESCRIPTION OF THE DRAWINGS

Fig. 1 shows a schematic configuration of a wireless communication system 5 according to an embodiment.
Fig. 2 shows an example of a system configuration of a wireless relay device 110.
Fig. 3 shows an example of a system configuration of a wireless base station 120.
Fig. 4 shows an example of a sequence relating to a wireless communication method which is executed in the wireless communication system 5.
Fig. 5 shows an example of a sequence relating to a wireless communication method which is executed in the wireless communication system 5.
Fig. 6 shows an example of a sequence relating to a wireless communication method which is executed in the wireless communication system 5.
Fig. 7 shows an example of a computer 2000 in which a plurality of embodiments of the present invention can be entirely or partially embodied.

### DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are essential to the solution of the invention.

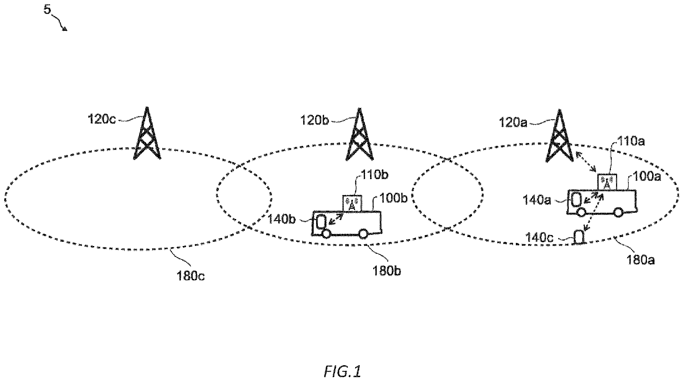

Fig. 1 shows a schematic configuration of a wireless communication system 5 according to an embodiment. The wireless communication system 5 includes: a wireless base station 120a, a wireless base station 120b, and a wireless base station 120c; a wireless relay device 110a and a wireless relay device 110b; a mobile body 100a and a mobile body 100b; and a terminal device 140a, a terminal device 140b, and a terminal device 140c.

In the present embodiment, the wireless base station 120a, the wireless base station 120b, and the wireless base station 120c may be collectively referred to as a "wireless base station 120" with suffixes of the reference signs being omitted. Similarly, the wireless relay device 110a and the wireless relay device 110b may be collectively referred to as a "wireless relay device 110" with suffixes of the reference signs being omitted. Similarly, the mobile body 100a and the mobile body 100b may be collectively referred to as a "mobile body 100" with suffixes of the reference signs being omitted. Similarly, the terminal device 140a, the terminal device 140b, and the terminal device 140c may be collectively referred to as a "terminal device 140" with suffixes of the reference signs being omitted.

The wireless base station 120 is a mobile communication base station which supports one or more mobile communication schemes. Similarly, the wireless relay device 110 and the terminal device 140 are wireless communication devices which support one or more mobile communication schemes. In the present embodiment, the mobile communication scheme supported by the wireless base station 120, the wireless relay device 110, and the terminal device 140 may be, for example, a mobile communication scheme that is used in a mobile communication system such as a fourth generation mobile communication system (4G) or a fifth generation mobile communication system (5G).

The wireless base station 120 is a base station fixed at a specific location. Each of the wireless base stations 120 forms a cell; and by forming the cell, performs a wireless communication with the wireless relay device 110 and the terminal device 140. For example, a cell 180a is a cell formed by the wireless base station 120a, a cell 180b is a cell formed by the wireless base station 120b, and a cell 180c is a cell formed by the wireless base station 120c. In the present embodiment, the cell 180a, the cell 180b, and the cell 180c may be collectively referred to as a "cell 180" with suffixes of the reference signs being omitted.

The wireless relay device 110 has a function for performing a service provision to the terminal device 140, as a wireless base station; and also has a function for receiving a service provision from the wireless base station 120, as a terminal device. The wireless relay device 110 relays a communication between the terminal device 140 and the wireless base station 120. The terminal device 140 can access a core network via the wireless base station 120. Even when it is not possible to directly communicate wirelessly with the wireless base station 120, the terminal device 140 may be able to access the core network via the wireless relay device 110 and the wireless base station 120.

The mobile body 100 is equipment that is able to move. The mobile body 100 is, for example, an automobile such as a bus, or a vehicle such as a street car. The vehicle is an example of transportation equipment. An example of the mobile body may include various types of aircrafts including an unmanned aerial vehicle, an artificial satellite, a ship, or the like. The mobile body 100a includes the wireless relay device 110a. The mobile body 100b includes the wireless relay device 110b. Accordingly, the wireless relay device 110a is movable together with the mobile body 100a, and the wireless relay device 110b is movable together with the mobile body 100b.

Accordingly, when the mobile body 100a is located in the cell 180a of the wireless base station 120a, the wireless relay device 110a relays the communication between the wireless base station 120a and the terminal device 140a that is carried by a user who is in the mobile body 100a. Further, the wireless relay device 110a relays the communication between the wireless base station 120a and the terminal device 140c located in a vicinity of the wireless relay device 110a. When the mobile body 100b is located in the cell 180b of the wireless base station 120b, the wireless relay device 110b relays the communication between the wireless base station 120b and the terminal device 140b carried by a user riding in the mobile body 100b.

In the wireless communication system 5 of an embodiment, the wireless base station 120 transmits broadcast information for the wireless relay device 110 having a function of a movable base station, in addition to conventional broadcast information for the terminal device 140. The wireless relay device 110 can discard the broadcast information for the terminal device 140 from among the received broadcast information, and perform location registration based on the broadcast information for the wireless relay device 110. On the other hand, the terminal device 140 discards the broadcast information for the wireless relay device 110 from among the received broadcast information, and performs location registration based on the broadcast information for the terminal device 140. This makes it possible for the wireless relay device 110 to appropriately perform processing to camp on the wireless base station 120, based on the broadcast information for the wireless relay device having a function of a movable base station.

In the wireless communication system 5 of an embodiment, the wireless base station 120 manages area identification information for identifying a cell area in which the wireless relay device 110 is able to relay the communication between the terminal device 140 and the wireless base station 120. As an example, the cell area is an area including one or more cells 180. The wireless base station 120 assigns, to the wireless relay device 110, cell identification information for identifying a cell that is formed by the wireless relay device 110 in one cell area. This makes it possible to identify the cell formed by the wireless relay device 110, in the cell area.

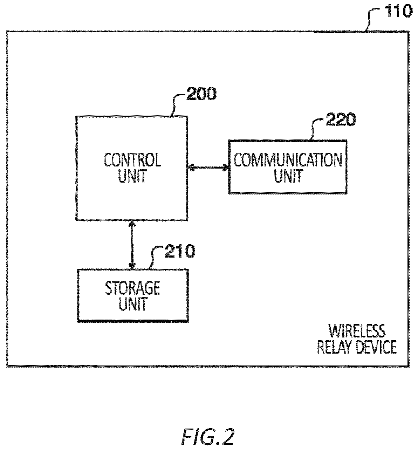

Fig. 2 shows an example of a system configuration of the wireless relay device 110. The wireless relay device 110 has a function of relaying the communication between the terminal device 140 and the wireless base station 120, or between another wireless relay device 110 and the wireless base station 120. The wireless relay device 110 includes a control unit 200, a storage unit 210, and a communication unit 220.

The control unit 200 controls the entire wireless relay device 110. The communication unit 220 is responsible for the wireless communication with the wireless base station 120 and the terminal device 140. The control unit 200 is realized by an arithmetic processing device including a processor. The storage unit 210 is realized including a non-volatile storage medium. The control unit 200 uses information stored in the storage unit 210 to perform the processing. The control unit 200 may be realized by a microcomputer including a CPU, a ROM, a RAM, an I/O, a bus, and the like. The wireless relay device 110 may be realized by a computer. The wireless relay device 110 may be realized by a single computer. The wireless relay device 110 may be realized by a plurality of computers. The functions of the wireless relay device 110 may be realized by a virtual system that is realized by using a virtualization technology.

The communication unit 220 receives one or more pieces of broadcast information that are transmitted from the wireless base station 120. The control unit 200 performs the processing to camp on the wireless base station 120 based on the one or more pieces of broadcast information. The one or more pieces of broadcast information include (i) first information for the wireless relay device 110 to perform processing to camp on the wireless base station 120, and (ii) second information for the terminal device to perform processing to camp on the wireless base station 120. The control unit 200 discards the second information and extracts the first information from among the one or more pieces of broadcast information, and performs the processing to camp on the wireless base station 120 based on the first information. The processing to camp on the wireless base station 120 is, for example, processing or the like relating to a location registration.

As an example, the first information includes a plurality of public land mobile network (PLMN) identifiers that are able to be used by the wireless base station 120. The control unit 200 performs the processing to camp on the wireless base station 120, based on a PLMN identifier preset in the wireless relay device 110 and the plurality of public land mobile network (PLMN) identifiers that are included in the first information. For example, when a PLMN identifier among the plurality of PLMN identifiers that are included in the first information is matched to the PLMN identifier preset in the wireless relay device 110, the control unit 200 determines that location registration processing can be performed for the wireless base station 120 which has transmitted the broadcast information including the first information.

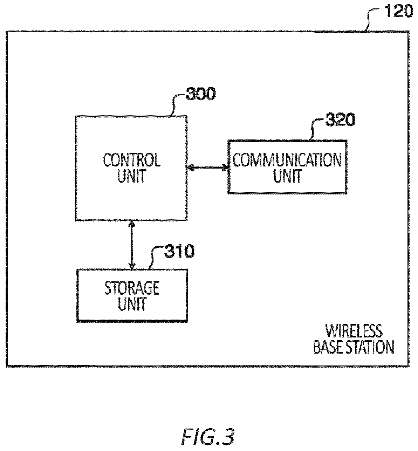

Fig. 3 shows an example of a system configuration of the wireless base station 120. The wireless base station 120 performs the wireless communication with one or more wireless relay devices 110. The wireless base station 120 includes a control unit 300, a storage unit 310, and a communication unit 320.

The control unit 300 controls the entire wireless base station 120. The communication unit 320 is responsible for the wireless communication with the wireless relay device 110 and the terminal device 140. The control unit 300 is realized by an arithmetic processing device including a processor. The storage unit 310 is realized including a non-volatile storage medium. The control unit 300 uses information stored in the storage unit 310 to perform the processing. The control unit 300 may be realized by a microcomputer including a CPU, a ROM, a RAM, an I/O, a bus, and the like. The wireless base station 120 may be realized by a computer. The wireless base station 120 may be realized by a single computer. The wireless base station 120 may be realized by a plurality of computers. The functions of the wireless base station 120 may be realized by a virtual system that is realized by using a virtualization technology.

The control unit 300 generates (i) the first information for the wireless relay device 110 to perform processing to camp on the wireless base station 120, and (ii) the second information for the terminal device to perform processing to camp on the wireless base station 120. The communication unit 320 transmits the first information and the second information by the broadcast information.

In an embodiment, the control unit 300 may generate first broadcast information including the first information, and second broadcast information including the first information for the terminal device. The communication unit 320 may transmit the second broadcast information separately from the first broadcast information.

In an embodiment, the control unit 300 may generate at least one piece of broadcast information including at least a part of the first information or the second information. The communication unit 320 may transmit the at least one piece of broadcast information generated by the control unit 300.

The broadcast information is, for example, system information. The system information may be, for example, a system information block (SIB).

The first information may include a plurality of public land mobile network (PLMN) identifiers that are able to be used by the wireless base station 120. The first information may include at least one of information for the wireless relay device 110 to perform a cell selection, or barring information for barring access to the wireless base station 120. Additionally, as the first information, information that is used for a handover control of the wireless relay device 110 may be included. Further, the broadcast information for distributing emergency information such as an earthquake emergency alert to the wireless relay device 110 may be defined.

The storage unit 310 stores the area identification information for identifying a cell area in which the relay with the wireless base station 120 is possible through the wireless relay device 110. The first information may include the area identification information.

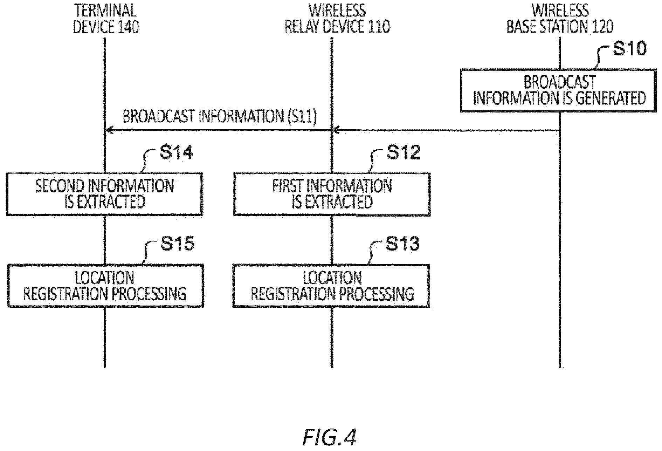

Fig. 4 shows an example of a sequence relating to a wireless communication method which is executed in the wireless communication system 5. Fig. 4 shows a sequence in a case where the wireless base station 120 transmits one piece of broadcast information including the first information and the second information.

In S10, the control unit 300 of the wireless base station 120 generates the broadcast information including the first information and the second information. The broadcast information is, for example, SIB1. In addition to a conventional field in which the first information is stored, a field for storing the second information may be added to SIB1. The broadcast information includes, as the second information, a public land mobile network (PLMN) list including the plurality of PLMN identifiers that are able to be used by the wireless base station 120, the area identification information, cell selection information that is information for the wireless relay device 110 to perform the cell selection, and barring information for barring access to the wireless base station 120. The cell selection information is, for example, cellSelectionInfo, and the barring information is, for example, BarringInfo. In this way, in addition to the PLMN list, the cell selection information, and the barring information for the terminal device 140, the broadcast information may include the PLMN list, the cell selection information, and the barring information for the wireless relay device 110.

In S11, the communication unit 320 of the wireless base station 120 transmits the broadcast information generated in S10.

When the wireless relay device 110 receives the broadcast information, the control unit 200 discards, in S12, the second information from the received broadcast information and extracts the first information. In S13, the control unit 200 performs the location registration processing based on the first information. For example, the control unit 200 selects the wireless base station 120 for which the location registration should be performed, and performs the location registration, when it is determined that the wireless base station 120 for which the location registration should be performed exists, at least based on the PLMN list, the cell selection information, and the area identification information.

When the terminal device 140 receives the broadcast information, the terminal device 140 discards, in S14, the first information from the received broadcast information and extracts the second information. In S15, the terminal device 140 performs the location registration processing based on the second information. For example, the terminal device 140 selects the wireless base station 120 for which the location registration should be performed, and performs the location registration, when it is determined that the wireless base station 120 for which the location registration should be performed exists, at least based on the PLMN list and the cell selection information.

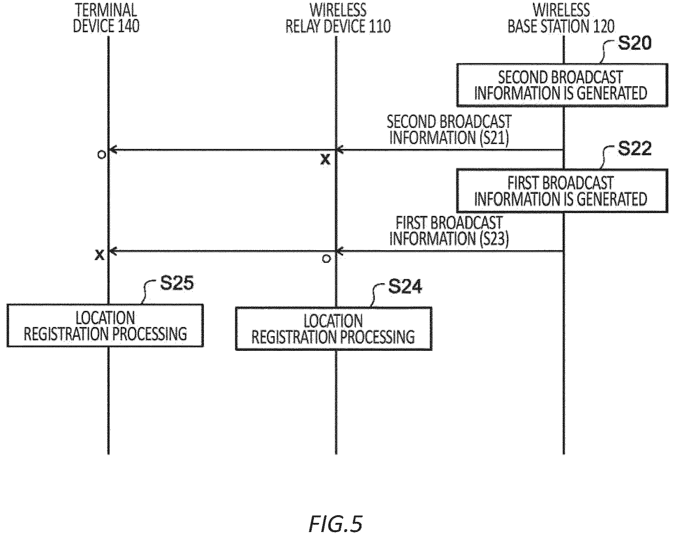

Fig. 5 shows an example of a sequence relating to a wireless communication method which is executed in the wireless communication system 5. Fig. 5 shows a sequence in a case where the wireless base station 120 separately transmits the first broadcast information including the first information, and the second broadcast information including the second information.

In S20, the control unit 300 of the wireless base station 120 generates the second broadcast information including the second information. In S21, the communication unit 320 transmits the second broadcast information. In S22, the control unit 300 generates the first broadcast information including the first information. In S23, the communication unit 320 transmits the second broadcast information. The second broadcast information may be, for example, an SIB defined separately from a conventional SIB for a terminal device which does not have a relay function.

When the wireless relay device 110 receives the second broadcast information, the control unit 200 discards the second broadcast information. On the other hand, when the wireless relay device 110 receives the first broadcast information, the control unit 200 performs, in S24, the location registration processing based on the first information that is included in the received first broadcast information. For example, the control unit 200 selects the wireless base station 120 for which the location registration should be performed, and performs the location registration, when it is determined that the wireless base station 120 for which the location registration should be performed exists, at least based on the PLMN list, the cell selection information, and the area identification information that are included in the first information.

When the terminal device 140 receives the first broadcast information, the terminal device 140 discards the first broadcast information. On the other hand, when the terminal device 140 receives the second broadcast information, the terminal device 140 performs, in S25, the location registration processing based on the second information that is included in the received second broadcast information. For example, the terminal device 140 selects the wireless base station 120 for which the location registration should be performed, and performs the location registration, when it is determined that the wireless base station 120 for which the location registration should be performed exists, at least based on the PLMN list and the cell selection information that are included in the second information.

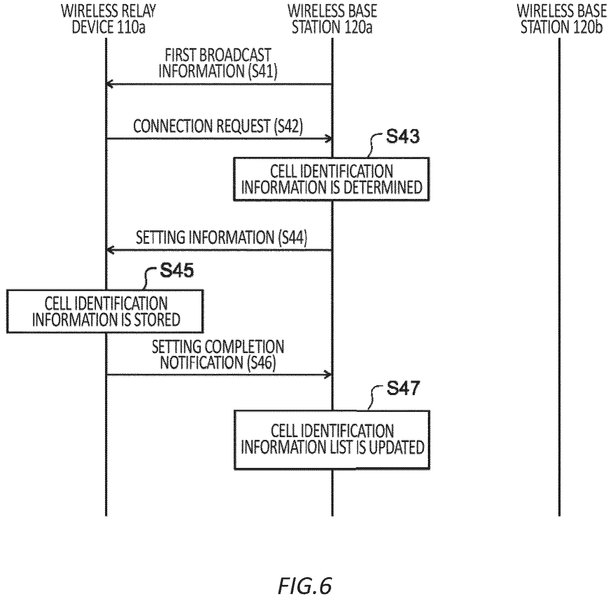

Fig. 6 shows an example of a sequence relating to a wireless communication method which is executed in the wireless communication system 5. Here, an example of a sequence in a case where the cell area is a cell which is formed by the wireless base station 120a, and the mobile body 100a enters the cell area and issues a signal, is shown. It is assumed that the wireless relay device 110a included in the mobile body 100a is in a state in which no cell identification information for identifying the cell that is formed by the wireless relay device 110 in the cell area is assigned.

In S41, the wireless base station 120a transmits the first broadcast information. The first broadcast information includes the first information. When the communication unit 220 of the wireless relay device 110a receives the first broadcast information in S41, the communication unit 220 transmits a connection request in S42. The connection request may include, for example, at least the area identification information, the cell identification information, and the PLMN identifier of the PLMN that is used by the wireless relay device 110a. The connection request is, for example, an RRC_Connection _Request message, an RRC_Setup_Request message, or the like.

For the cell identification information that is included in the connection request, the cell identification information that is assigned to the wireless relay device 110a is set. Here, the wireless relay device 110a is in a state in which no cell identification information is assigned, and thus for the cell identification information of the connection request, a predetermined value (for example, 0xFF) indicating that the cell identification information is unassigned is set.

When the communication unit 320 of the wireless base station 120a receives the connection request, the control unit 300 determines in S43 that the cell identification information is unassigned to the wireless relay device 110a, based on the cell identification information that is included in the connection request. In this case, the control unit 300 determines the cell identification information that is used by the wireless relay device 110a. For example, the storage unit 310 of the wireless base station 120a stores a cell identification information list indicating: all of the plurality of pieces of cell identification information that are able to be assigned to the wireless relay device 110 in the cell area; and the cell identification information currently assigned to the wireless relay device 110 in the cell area. From among all of the plurality of pieces of cell identification information that are able to be assigned to the wireless relay device 110, and from the cell identification information that is not assigned to the wireless relay device 110, the control unit 300 determines one piece of cell identification information that is assigned to the wireless relay device 110a.

In S44, the communication unit 320 of the wireless base station 120a transmits setting information to the wireless relay device 110a. The setting information includes at least the area identification information for identifying the cell area, the cell identification information, and the PLMN information. For the cell identification information, the cell identification information determined in S43 is set. For the PLMN information, the PLMN information that is included in the connection request in S42 is set. The setting information is, for example, an RRC_Connection_Setup message, an RRC_Setup message, or the like.

When the communication unit 220 of the wireless relay device 110a receives the setting information, the control unit 200 stores, in S45, the cell identification information that is included in the setting information, in the storage unit 210 as the cell identification information assigned to the wireless relay device 110a. Consecutively, in S46, the communication unit 220 transmits, to the wireless base station 120a, a setting completion notification indicating that the setting of the cell identification information is completed. The setting completion notification is an RRC_Connection_Setup_Complete message, an RRC_Setup_Complete message, or the like.

When the communication unit 320 of the wireless base station 120a receives the setting completion notification, the control unit 300 updates, in S47, the cell identification information list that is stored in the storage unit 310. Specifically, the control unit 300 updates the cell identification information list, by setting the cell identification information assigned to the wireless relay device 110a as the assigned cell identification information, in the cell identification information list. This makes it possible for the wireless base station 120a to assign, to the wireless relay device 110a, cell identification information that does not overlap with cell identification information of another wireless relay device 110 in the cell area.

In this way, in a case where the wireless relay device 110 enters the cell area and performs the location registration, the wireless relay device 110 is assigned the cell identification information of the wireless relay device 110 in the cell area. The wireless relay device 110 uses the cell identification information assigned in the cell area so as to be able to perform the service provision to the terminal device 140 as a base station. It should be noted that the cell identification information is, for example, a cell global identifier (CGI).

With the wireless communication system 5 described above, the wireless base station 120 transmits the broadcast information for the wireless relay device 110, in addition to the conventional broadcast information for the terminal device 140. This makes it possible for the wireless base station 120 to discard the broadcast information for the terminal device 140 and perform the location registration based on the broadcast information for the wireless relay device 110. This makes it possible for the wireless relay device 110 to appropriately perform the processing to camp on the wireless base station 120, without making significant changes to a mechanism relating to the broadcast information. This makes it possible to enhance stability of the communication by the wireless relay device 110, and furthermore, makes it possible to enhance safety of traffic for the mobile body 100.

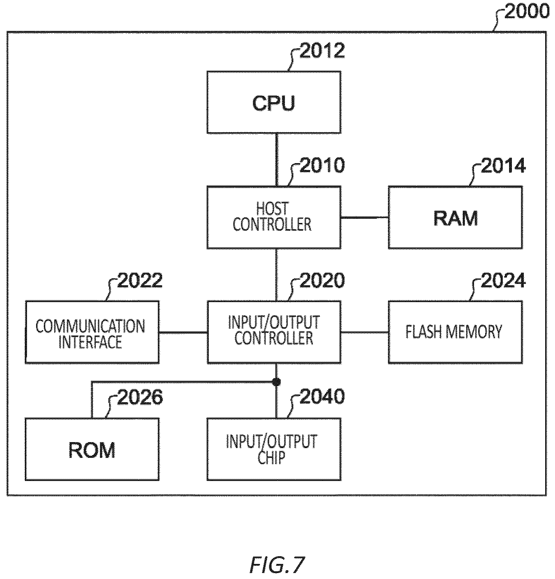

Fig. 7 shows an example of a computer 2000 in which a plurality of embodiments of the present invention can be entirely or partially embodied. The program installed on the computer 2000 can cause the computer 2000 to function as the system according to the embodiment or each unit of the system, or various devices such as the wireless base station and the wireless relay device or each unit of the device, to perform operations associated with the system or each unit of the system or the device or each unit of the device, and/or to perform a process or steps of the process according to the embodiment. Such a program may be executed by a CPU 2012 in order to cause the computer 2000 to execute a specific operation associated with some or all of the processing procedures and the blocks in the block diagrams described herein.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, and thereby controls each unit.

The communication interface 2022 communicates with another electronic device via a network. The flash memory 2024 stores a program and data used by the CPU 2012 in the computer 2000. The ROM 2026 stores a boot program or the like executed by the computer 2000 upon activation, and/or a program which depends on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer-readable storage medium such as a CD-ROM, a DVD-ROM, or a memory card. The RAM 2014, the ROM 2026, or the flash memory 2024 is an example of the computer-readable storage medium. The program is installed in the flash memory 2024, the RAM 2014, or the ROM 2026, and executed by the CPU 2012. Information processing written in these programs is read by the computer 2000, and provides cooperation between the programs and the various types of hardware resources described above. An apparatus or a method may be actualized by executing operations or processing of information according to a use of the computer 2000.

For example, when a communication is executed between the computer 2000 and an external device, the CPU 2012 may execute a communication program loaded on the RAM 2014, and instruct the communication interface 2022 to execute communication processing based on processing written in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 and the like to be read into the RAM 2014, and execute various kinds of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various kinds of processing including various kinds of operations, information processing, conditional judgement, conditional branching, unconditional branching, information retrieval/replacement, or the like described herein and specified by instruction sequences of the programs, and write back a result into the RAM 2014. In addition, the CPU 2012 may retrieve information in a file, a database, or the like in the recording medium. For example, when multiple entries each having an attribute value of a first attribute associated with an attribute value of a second attribute, is stored in the recording medium, the CPU 2012 may retrieve an entry having a designated attribute value of the first attribute that matches a condition from these multiple entries, and read the attribute value of the second attribute stored in this entry, thereby obtaining the attribute value of the second attribute associated with the first attribute that satisfies a predetermined condition.

The programs or software modules described above may be stored in the computer-readable storage medium on the computer 2000 or in the vicinity of the computer 2000. A recording medium such as a hard disk or a RAM provided in a server system connected to a dedicated communication network or the Internet can be used as the computer-readable storage medium. A program stored in the computer-readable storage medium may be provided to the computer 2000 via a network.

A program, which is installed on the computer 2000 and causes the computer 2000 to function as the wireless relay device 110, may work on a CPU 2012 or the like to cause the computer 2000 to function as each unit of the wireless relay device 110. Information processing written in these programs functions as each unit of the wireless relay device 110 that is specific means by which software and the above-described various hardware resources cooperate by being read by the computer 2000. Then, by the specific means realizing calculation or processing of information in accordance with a purpose of use of the computer 2000 in the present embodiment, the unique wireless relay device 110 in accordance with the purpose of use is constructed.

A program, which is installed on the computer 2000 and causes the computer 2000 to function as the wireless base station 120, may work on a CPU 2012 or the like to cause the computer 2000 to function as each unit of the wireless base station 120. Information processing written in these programs functions as each unit of the wireless base station 120 that is specific means by which software and the above-described various hardware resources cooperate by being read by the computer 2000. Then, by the specific means realizing calculation or processing of information in accordance with a purpose of use of the computer 2000 in the present embodiment, the unique wireless base station 120 in accordance with the purpose of use is constructed.

Various embodiments have been described with reference to the block diagrams and the like. In the block diagrams, each block may represent (1) a step of a process in which an operation is executed, or (2) each unit of the apparatus having a role in executing the operation. A specific step and each unit may be implemented by a dedicated circuit, a programmable circuit supplied with computer-readable instructions stored on a computer-readable storage medium, and/or a processor supplied with computer-readable instructions stored on a computer-readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and another logical operation, and a memory element or the like such as a flip-flop, a register, a field programmable gate array (FPGA), a programmable logic array (PLA), or the like.

The computer-readable storage medium may include any tangible device capable of storing instructions to be executed by an appropriate device, and as a result, the computer-readable storage medium having instructions stored therein forms at least a part of a product including instructions which can be executed to provide means for executing processing procedures or operations specified in the block diagrams. An example of the computer-readable storage medium may include an electronic storage medium, a magnetic storage medium, an optical storage medium, an electromagnetic storage medium, a semiconductor storage medium, or the like. A more specific example of the computer-readable storage medium may include a floppy (registered trademark) disk, a diskette, a hard disk, a random-access memory (RAM), a read-only memory (ROM), an erasable programmable read-only memory (EPROM or flash memory), an electrically erasable programmable read-only memory (EEPROM), a static random-access memory (SRAM), a compact disc read-only memory (CD-ROM), a digital versatile disc (DVD), a Blu-ray (registered trademark) disc, a memory stick, an integrated circuit card, or the like.

The computer-readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as Smalltalk (registered trademark), JAVA (registered trademark), and C++, or the like, and a conventional procedural programming language such as a "C" programming language or a similar programming language.

Computer-readable instructions may be provided to a processor of a general purpose computer, a special purpose computer, or another programmable data processing apparatus, or to programmable circuit, locally or via a local area network (LAN), wide area network (WAN) such as the Internet or the like, and a computer-readable instruction may be executed to provide means for executing operations specified in the described processing procedures or block diagrams. Examples of the processor include a computer processor, a processing unit, a microprocessor, a digital signal processor, a controller, a microcontroller, and the like.

While the present invention has been described by way of the embodiments, the technical scope of the present invention is not limited to the above-described embodiments. It is apparent to persons skilled in the art that various alterations and improvements can be added to the above-described embodiments. It is also apparent from the scope of the claims that the embodiments added with such alterations or improvements can be included in the technical scope of the invention.

It should be noted that the operations, procedures, steps, stages, or the like of each process performed by an apparatus, system, program, and method shown in the claims, the specification, or the drawings can be performed in any order as long as the order is not indicated by "prior to," "before," or the like and as long as the output from a previous process is not used in a later process. Even if the process flow is described using phrases such as "first" or "next" in the claims, the specification, or the drawings for the sake of convenience, it does not necessarily mean that the process must be performed in this order.

### EXPLANATION OF REFERENCES

5: wireless communication system
100: mobile body
110: wireless relay device
120: wireless base station
140: terminal device
180: cell
200: control unit
210: storage unit
220: communication unit
300: control unit
310: storage unit
320: communication unit
2000: computer
2010: host controller
2012: CPU
2014: RAM
2020: input/output controller
2022: communication interface
2024: flash memory
2026: ROM
2040: input/output chip.

## Claims

1. A wireless base station comprising:
a control unit which generates
(i) first information for a wireless relay device to perform processing to camp on the wireless base station, the wireless relay device being movable and having a function of relaying a communication between a terminal device and the wireless base station, or between another wireless relay device and the wireless base station, and
(ii) second information for the terminal device to perform processing to camp on the wireless base station; and
a communication unit which transmits the first information and the second information by broadcast information.

2. The wireless base station according to claim 1, wherein
the control unit generates first broadcast information including the first information, and second broadcast information including the first information for the terminal device, and
the communication unit transmits the second broadcast information separately from the first broadcast information.

3. The wireless base station according to claim 1, wherein
the control unit generates at least one piece of broadcast information including at least a part of the first information or the second information, and
the communication unit transmits the at least one piece of broadcast information generated by the control unit.

4. The wireless base station according to any one of claims 1 to 3, wherein
the broadcast information is a system information block (SIB).

5. The wireless base station according to any one of claims 1 to 3, wherein
the first information includes a plurality of public land mobile network (PLMN) identifiers that are able to be used by the wireless base station.

6. The wireless base station according to any one of claims 1 to 3, wherein
the first information includes at least one of information for the wireless relay device to perform a cell selection, or barring information for barring access to the wireless base station.

7. The wireless base station according to any one of claims 1 to 3, further comprising:
a storage unit which stores area identification information for identifying a cell area in which the wireless relay device is able to relay the communication between the terminal device and the wireless base station, wherein
the first information includes the area identification information.

8. A wireless communication system comprising:
the wireless base station according to any one of claims 1 to 3; and
the wireless relay device.

9. A program for causing a computer to function as the wireless base station according to any one of claims 1 to 3.

10. A wireless relay device which is movable, the wireless relay device comprising:
a communication unit which receives one or more pieces of broadcast information that are transmitted from a wireless base station; and
a control unit which performs processing to camp on the wireless base station based on the one or more pieces of broadcast information,
the wireless relay device having a function of relaying a communication between a terminal device and the base station, or between another wireless relay device and the wireless base station, wherein
the one or more pieces of broadcast information include (i) first information for the wireless relay device to perform processing to camp on the wireless base station, and (ii) second information for the terminal device to perform processing to camp on the wireless base station, and
the control unit discards the second information and extracts the first information from among the one or more pieces of broadcast information, and performs the processing to camp on the wireless base station based on the first information.

11. The wireless relay device according to claim 10, wherein
the first information includes a plurality of public land mobile network (PLMN) identifiers that are able to be used by the wireless base station, and
the control unit performs the processing to camp on the wireless base station, based on a PLMN identifier preset in the wireless relay device and the plurality of public land mobile network (PLMN) identifiers that are included in the first information.

12. A mobile body comprising: the wireless relay device according to claim10 or 11.

13. A wireless communication system comprising:
the wireless relay device according to claim 10 or 11; and
the wireless base station.

14. A program for causing a computer to function as the wireless relay device according to claim 10 or 11.

15. A wireless communication method comprising:
generating
(i) first information for a wireless relay device to perform processing to camp on a wireless base station, the wireless relay device being movable and having a function of relaying a communication between a terminal device and the wireless base station, or between another wireless relay device and the wireless base station, and
(ii) second information for the terminal device to perform processing to camp on the wireless base station; and
transmitting the first information and the second information by broadcast information.

16. A wireless communication method that is executed by a wireless relay device which is movable, the wireless communication method comprising:
receiving one or more pieces of broadcast information that are transmitted from a wireless base station; and
performing processing to camp on the wireless base station based on the one or more pieces of broadcast information, wherein
the wireless relay device has a function of relaying a communication between a terminal device and the base station, or between another wireless relay device and the wireless base station,
the one or more pieces of broadcast information include (i) first information for the wireless relay device to perform processing to camp on the wireless base station, and (ii) second information for the terminal device to perform processing to camp on the wireless base station, and
the performing the processing to camp on the wireless base station is discarding the second information and extracting the first information from among the one or more pieces of broadcast information, and performing the processing to camp on the wireless base station based on the first information.
